# EUROPÄISCHE PATENTANMELDUNG

(11) **EP 3 323 324 A1**
(43) Veröffentlichungstag der Anmeldung: **23.05.2018**
(21) Anmeldenummer: 17197790.3
(22) Anmeldetag: 23.10.2017
(51) Int. Cl.: A47J 27/04, A47J 27/08

(54) **GARGESCHIRR**

(30) Priorität: 07.11.2016 ES 201631414
(71) Anmelder: BSH Hausgeräte GmbH, 81739 München (DE)
(72) Erfinder: Andres Bello, Amparo, 46020 Valencia (ES); De Jesus de Barros, Carlos, 46020 Valencia (ES); Garcia Segovia, Purificación, 46370 Chiva (Valencia) (ES); Martinez Monzó, Javier, 46370 Chiva (Valencia) (ES); Mir Bel, Jorge, 50019 Zaragoza (ES)

(57) **Zusammenfassung**

Die Erfindung geht aus von einem Gargeschirr (10a-b) mit zumindest einem Erhitzungsbereich (12a-b), welcher zu einer Aufnahme von von einem Kochfeld (14a-b) bereitbestellter Energie vorgesehen ist, und mit zumindest einem Aufnahmeraum (16ab), welcher zu einer Aufnahme von Gargut vorgesehen ist.

Um eine gattungsgemäße Vorrichtung mit verbesserten Eigenschaften hinsichtlich eines Bedienkomforts bereitzustellen, wird vorgeschlagen, dass das Gargeschirr (10a-b) zumindest eine Druckbereitstellungseinheit (18a-b) aufweist, welche zu einer Bereitstellung eines Überdrucks in dem Aufnahmeraum (16a-b) vorgesehen ist.

## Beschreibung

Die Erfindung betrifft ein Gargeschirr nach dem Oberbegriff des Anspruchs 1 und ein Verfahren zum Betrieb eines Gargeschirrs nach dem Oberbegriff des Anspruchs 10.

Aus dem Stand der Technik ist bereits ein Gargeschirr bekannt, welches einen Erhitzungsbereich und einen Aufnahmeraum aufweist. In einem Betriebszustand nimmt der Erhitzungsbereich von einem Kochfeld bereitgestellte Energie auf. Hierdurch erhitzt sich ein Gargeschirrboden des Gargeschirrs, welcher den Erhitzungsbereich ausbildet. Durch die Erhitzung des den Erhitzungsbereich ausbildenden Gargeschirrbodens wird in dem Betriebszustand in dem Aufnahmeraum befindliches Gargut erwärmt, welches teilweise oder gänzlich fluidförmig ausgebildet ist. Das Gargeschirr weist zudem einen Gargeschirrdeckel und eine Verschlusseinheit auf, welche in dem Betriebszustand den Aufnahmeraum mittels des Gargeschirrdeckels luftdicht verschließt. Durch die Erhitzung des teilweise oder gänzlich fluiden Garguts baut sich in dem Betriebszustand in dem Aufnahmeraum ein Überdruck auf. Der Aufbau eines benötigten Überdrucks dauert jedoch eine gewisse Zeit und kostet Energie. Insbesondere kann erst nach Erreichen des benötigten Überdrucks in dem Aufnahmeraum ein Garvorgang gestartet werden.

Die Aufgabe der Erfindung besteht insbesondere darin, eine gattungsgemäße Vorrichtung mit verbesserten Eigenschaften hinsichtlich eines Bedienkomforts bereitzustellen. Die Aufgabe wird erfindungsgemäß durch die Merkmale der Ansprüche 1 und 10 gelöst, während vorteilhafte Ausgestaltungen und Weiterbildungen der Erfindung den Unteransprüchen entnommen werden können.

Die Erfindung geht aus von einem Gargeschirr, insbesondere von einem Dampfgargeschirr, mit zumindest einem Erhitzungsbereich, welcher zu einer Aufnahme von von einem Kochfeld bereitbestellter Energie vorgesehen ist, und mit zumindest einem Aufnahmeraum, welcher zu einer Aufnahme von Gargut vorgesehen ist.

Es wird vorgeschlagen, dass das Gargeschirr, insbesondere das Dampfgargeschirr, zumindest eine Druckbereitstellungseinheit aufweist, welche zu einer Bereitstellung eines Überdrucks in dem Aufnahmeraum vorgesehen ist. Das Gargeschirr weist insbesondere zumindest eine Gargeschirrwandung auf. Die Gargeschirrwandung könnte beispielsweise als ein Gargeschirrboden und/oder als eine Gargeschirrseitenwand und/oder als ein Gargeschirrdeckel ausgebildet sein. Das Gargeschirr weist insbesondere zumindest einen Gargeschirrboden und insbesondere zumindest eine Gargeschirrseitenwand auf, welche insbesondere gemeinsam mit dem Gargeschirrboden den Aufnahmeraum wenigstens teilweise begrenzt. Insbesondere kann das Gargeschirr zumindest einen Gargeschirrdeckel aufweisen, welcher in wenigstens einem Betriebszustand insbesondere gemeinsam mit dem Gargeschirrboden und der Gargeschirrseitenwand den Aufnahmeraum wenigstens im Wesentlichen und unter Berücksichtigung einer Dichtungstoleranz vollständig begrenzt. Insbesondere ist der Aufnahmeraum als ein von dem Gargeschirr, insbesondere von dem Gargeschirrboden und der Gargeschirrseitenwand und dem Gargeschirrdeckel, begrenzter und/oder definierter Hohlraum ausgebildet. Insbesondere weist das Gargeschirr zumindest eine Verschlusseinheit auf, welche dazu vorgesehen ist, den Aufnahmeraum wenigstens im Wesentlichen luftdicht und/oder druckdicht zu verschließen. Die Verschlusseinheit könnte in wenigstens einem Betriebszustand insbesondere den Gargeschirrdeckel und die Gargeschirrseitenwand mechanisch miteinander verbinden und insbesondere eine Entstehung zumindest eines Luftspalts zwischen dem Gargeschirrdeckel und der Gargeschirrseitenwand wenigstens im Wesentlichen verhindern. Insbesondere weist die Verschlusseinheit zumindest eine Dichtung auf, welche in wenigstens einem Betriebszustand insbesondere den Luftspalt zwischen dem Gargeschirrdeckel und der Gargeschirrseitenwand wenigstens im Wesentlichen verschließen und insbesondere wenigstens im Wesentlichen zwischen dem Gargeschirrdeckel und der Gargeschirrseitenwand angeordnet sein könnte. In wenigstens einem Betriebszustand ist in dem Aufnahmeraum zumindest ein Gargut zu einer Erhitzung und/oder zu einer Erwärmung und/oder zu einer Garung und/oder zu einem Warmhalten angeordnet. Das Gargut ist insbesondere zumindest ein Lebensmittel. Das Gargeschirr ist insbesondere zu einem Aufstellen auf zumindest einer Aufstellplatte, insbesondere auf zumindest einer Kochfeldplatte eines Kochfelds und/oder auf zumindest einer Arbeitsplatte, und insbesondere zu einer induktiven Erhitzung, insbesondere durch zumindest ein in einer Einbaulage unterhalb der Aufstellplatte angeordnetes Heizelement, insbesondere Induktionsheizelement, des Kochfelds, vorgesehen. In wenigstens einem Betriebszustand ist der Gargeschirrboden insbesondere wenigstens teilweise in Kontakt mit der Aufstellplatte angeordnet und berührt die Aufstellplatte insbesondere wenigstens teilweise. Die Aufstellplatte könnte beispielsweise eine Hausgeräteplatte und/oder eine Kochfeldplatte und/oder eine Arbeitsplatte sein. Unter einem "Erhitzungsbereich" soll insbesondere ein Bereich verstanden werden, welcher zu einer Erwärmung und/oder Erhitzung beispielsweise durch Wärmeübertragung und/oder vorteilhaft mittels eines Stromflusses, insbesondere eines Wirbelstromflusses, vorgesehen ist. Insbesondere weist der Erhitzungsbereich eine elektrische Leitfähigkeit von mindestens 10⁵ S/m, insbesondere von mindestens 10⁶ S/m und besonders vorteilhaft von mindestens 10⁷ S/m auf. Insbesondere weist der Erhitzungsbereich zumindest ein Material mit einer spezifischen Wärmeleitfähigkeit von mindestens 15 W/m/K, insbesondere von mindestens 50 W/m/K, vorteilhaft von mindestens 100 W/m/K und besonders vorteilhaft von mindestens 200 W/m/K auf. Der Erhitzungsbereich besteht insbesondere wenigstens teilweise und vorteilhaft wenigstens zu einem Großteil aus zumindest einem Metall, wie beispielsweise Aluminium und/oder Kupfer und/oder Eisen und/oder Stahl und/oder Silber. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Der Erhitzungsbereich ist insbesondere ein Teilbereich des Gargeschirrs und vorteilhaft des Gargeschirrbodens. Insbesondere ist der Erhitzungsbereich in einer Einbaulage der Aufstellplatte zugewandt angeordnet und weist insbesondere einen geringsten Abstand zu der Aufstellplatte auf. Unter einer "Druckbereitstellungseinheit" soll insbesondere eine Einheit verstanden werden, mittels welcher ein in dem Aufnahmeraum herrschender Druck einstellbar und/oder veränderbar und/oder erzeugbar ist. Insbesondere ist die Druckbereitstellungseinheit von der Verschlusseinheit, welche insbesondere zu einem luftdichten und/oder druckdichten Verschließen des Aufnahmeraums vorgesehen ist, und insbesondere zusätzlich von dem Gargeschirrdeckel verschieden. Die Druckbereitstellungseinheit ist insbesondere dazu vorgesehen, Druck in dem Aufnahmeraum in einer von einer Erhitzung zumindest eines Fluids verschiedenen Weise bereitzustellen. Insbesondere ist die Druckbereitstellungseinheit dazu vorgesehen, den Überdruck in dem Aufnahmeraum isotherm bereitzustellen. Die Druckbereitstellungseinheit ist in wenigstens einem Betriebszustand insbesondere wenigstens im Wesentlichen und vorteilhaft vollständig in dem Gargeschirr integriert und/oder an dem Gargeschirr angeordnet. Beispielsweise könnte die Druckbereitstellungseinheit zumindest ein Druckbereitstellungselement aufweisen, welches insbesondere zumindest eine Gestalt aufweisen könnte, die wenigstens im Wesentlichen an eine Querschnittsform des Aufnahmeraums angepasst sein und/oder der Querschnittsform des Aufnahmeraums wenigstens im Wesentlichen entsprechen könnte. Das Druckbereitstellungselement könnte beispielsweise als ein Stempel ausgebildet und insbesondere dazu vorgesehen sein, in wenigstens einem Betriebszustand zumindest ein in dem Aufnahmeraum befindliches Fluid, insbesondere mittels einer Bewegung des Druckbereitstellungselements parallel zu zumindest einer Vertikalrichtung, zu komprimieren und/oder zu dekomprimieren. Alternativ oder zusätzlich könnte die Druckbereitstellungseinheit dazu vorgesehen sein, Druck in dem Aufnahmeraum mittels zumindest eines in den Aufnahmeraum eingeleiteten Fluids bereitzustellen. Beispielsweise könnte das mittels der Druckbereitstellungseinheit in den Aufnahmeraum eingeleitete Fluid Raumtemperatur aufweisen und sich vorteilhaft vor einer Einbringung in den Aufnahmeraum in einem komprimierten Zustand befinden. Das Fluid könnte beispielsweise ein Gas und/oder eine Flüssigkeit und/oder ein Gas-FlüssigkeitsGemisch sein. Die Vertikalrichtung ist in wenigstens einem Betriebszustand insbesondere senkrecht zu der Aufstellplatte und/oder zu dem Gargeschirrboden ausgerichtet. Unter der Wendung, dass die Druckbereitstellungseinheit zu einer "Bereitstellung" eines Überdrucks in dem Aufnahmeraum vorgesehen ist, soll insbesondere verstanden werden, dass die Druckbereitstellungseinheit zu einer Erzeugung des Überdrucks in dem Aufnahmeraum vorgesehen ist, um insbesondere den Überdruck in dem Aufnahmeraum bereitzustellen, und/oder dass die Druckbereitstellungseinheit zu einer Zuführung zumindest eines Fluids in den Aufnahmeraum vorgesehen ist, um insbesondere den Überdruck in dem Aufnahmeraum bereitzustellen. Unter einem "Überdruck" soll insbesondere eine Differenz zwischen einem in wenigstens einem Betriebszustand in dem Aufnahmeraum herrschenden Druck und einem Atmosphärendruck und/oder einem Umgebungsdruck verstanden werden, welche insbesondere einen Wert größer als Null annimmt. Insbesondere ist ein in wenigstens einem Betriebszustand in dem Aufnahmeraum herrschender Druck größer als ein Atmosphärendruck und/oder als ein Umgebungsdruck und weist auf Meereshöhe insbesondere einen Wert von mehr als 1013,25 hPa, vorteilhaft von mindestens 1014 hPa, besonders vorteilhaft von mindestens 1050 hPa, vorzugsweise von mindestens 1100 hPa und besonders bevorzugt von mindestens 1250 hPa auf. Insbesondere weist der Druck in dem Aufnahmeraum in wenigstens einem Betriebszustand auf Meereshöhe einen Wert von maximal 2026,5 hPa auf. In dem Aufnahmeraum könnte in wenigstens einem Betriebszustand insbesondere ein Überdruck von maximal 1013,25 hPa herrschen. Unter einem "Betriebszustand" soll insbesondere ein Zustand verstanden werden, in welchem der Aufnahmeraum wenigstens im Wesentlichen und unter Berücksichtigung einer Dichtungstoleranz vollständig luftdicht verschlossen ist und sich insbesondere der Gargeschirrdeckel und die Gargeschirrseitenwand unmittelbar und/oder mittelbar, insbesondere über zumindest eine Dichtung und/oder über die Verschlusseinheit, berühren. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Bedienkomfort erreicht werden. Insbesondere kann auf eine Energie, welche zu einer Erhitzung eines Fluids zu einer Erzeugung des Überdrucks in dem Aufnahmeraum benötigt wird, verzichtet werden, wodurch insbesondere geringe Kosten und/oder eine kurze Gardauer und/oder eine kurze Zeit bis zum Start eines Garvorgangs ermöglicht werden können. Insbesondere kann ein Garvorgang sofort gestartet werden, wodurch insbesondere eine Gartemperatur schnell erreicht werden kann. Der Überdruck in dem Aufnahmeraum kann insbesondere in zuverlässiger Art und Weise schnell bereitgestellt werden.

Ferner wird vorgeschlagen, dass die Druckbereitstellungseinheit zumindest einen Fluideingang aufweist und dazu vorgesehen ist, über den Fluideingang zumindest ein Fluid zu der Bereitstellung des Überdrucks in den Aufnahmeraum einzuleiten. Insbesondere ist die Druckbereitstellungseinheit dazu vorgesehen, den Überdruck in dem Aufnahmeraum durch Einleiten eines sich außerhalb des Aufnahmeraums befindlichen Fluids über den Fluideingang in den Aufnahmeraum bereitzustellen. Der Fluideingang ist insbesondere in zumindest einer den Aufnahmeraum begrenzenden Gargeschirrwandung angeordnet und/oder angebracht und vorteilhaft wenigstens teilweise durch die Gargeschirrwandung gebildet. Beispielsweise könnte der Fluideingang an der Gargeschirrseitenwand angeordnet und insbesondere wenigstens teilweise von der Gargeschirrseitenwand gebildet sein. Insbesondere ist der Fluideingang an dem Gargeschirrdeckel angeordnet und insbesondere wenigstens teilweise von dem Gargeschirrdeckel gebildet. Der Gargeschirrdeckel weist insbesondere zumindest eine Ausnehmung auf, welche den Fluideingang wenigstens teilweise und insbesondere wenigstens im Wesentlichen ausbildet und/oder definiert. Dadurch kann der Überdruck in dem Aufnahmeraum insbesondere auf einfache und/oder unkomplizierte Weise bereitgestellt werden.

Zudem wird vorgeschlagen, dass die Druckbereitstellungseinheit zumindest eine an dem Fluideingang angeordnete Ventileinheit aufweist, mittels welcher eine in den Aufnahmeraum eingeleitete Menge an Fluid einstellbar ist. Beispielsweise könnte die Ventileinheit zumindest ein elektrisches Ventil und/oder zumindest ein magnetisches Ventil aufweisen, mittels welchen/welchem eine in den Aufnahmeraum eingeleitete Menge an Fluid einstellbar sein könnte. Alternativ oder zusätzlich könnte die Ventileinheit zumindest ein manuell betätigbares Ventil aufweisen, mittels welchem eine in den Aufnahmeraum eingeleitete Menge an Fluid einstellbar sein könnte. Dadurch kann insbesondere ein in dem Aufnahmeraum gewünschter Überdruck eingestellt werden, wodurch insbesondere ein hoher Bedienkomfort erreicht werden kann.

Beispielsweise könnte die Druckbereitstellungseinheit dazu vorgesehen sein, in wenigstens einem Betriebszustand insbesondere ausschließlich das Fluid in den Aufnahmeraum einzuleiten. Vorzugsweise ist die Druckbereitstellungseinheit dazu vorgesehen, in wenigstens einem Betriebszustand gemeinsam mit dem Fluid zumindest ein Geruchsmittel und/oder Geschmacksmittel insbesondere über den Fluideingang in den Aufnahmeraum einzuleiten. Das Geruchsmittel und/oder das Geschmacksmittel ist insbesondere ein Fluid. Beispielsweise könnte das Geruchsmittel und/oder das Geschmacksmittel zumindest einen Geruch und/oder Geschmack von Meersalz und/oder von Hefe und/oder von Rauch aufweisen und diesen Geruch und/oder Geschmack insbesondere zumindest einem in dem Aufnahmeraum befindlichen Gargut, insbesondere Lebensmittel, zufügen. Dadurch kann insbesondere eine hohe Reproduzierbarkeit von Garergebnissen ermöglicht werden, da insbesondere eine Anwesenheit des Geruchsmittels und/oder des Geschmackmittels während des gesamten Garvorgangs in dem Aufnahmeraum gewährleistet werden kann.

Ferner wird vorgeschlagen, dass die Druckbereitstellungseinheit zumindest einen Fluidvorratsbehälter aufweist, welcher zu einer Bereitstellung von Fluid vorgesehen ist. Insbesondere ist der Fluidvorratsbehälter als ein Überdruckbehälter ausgebildet und insbesondere zu einer Speicherung von komprimiertem Fluid vorgesehen. Der Fluidvorratsbehälter weist insbesondere zumindest eine Fluidvorratskammer auf, welche insbesondere zu einer Speicherung von komprimiertem Fluid vorgesehen ist. In wenigstens einem Betriebszustand ist der Fluidvorratsbehälter insbesondere in fluidtechnischem Kontakt mit dem Fluideingang angeordnet und insbesondere über die Ventileinheit fluidtechnisch von dem Aufnahmeraum getrennt. Der Fluidvorratsbehälter ist insbesondere zu einem reversiblen Anschluss an die Ventileinheit und/oder an den Fluideingang vorgesehen. Beispielsweise könnte die Druckbereitstellungseinheit zumindest zwei, insbesondere zumindest drei, vorteilhaft zumindest vier und vorzugsweise mehrere Fluidvorratsbehälter aufweisen, welche sich insbesondere in zumindest einem Merkmal unterscheiden und für verschiedene Verwendungen vorgesehen sein könnten. Beispielsweise könnten sich die Fluidvorratsbehälter in zumindest einem Fassungsvermögen, insbesondere an Fluid, und/oder in zumindest einem Geruchsmittel und/oder in zumindest einem Geschmacksmittel unterscheiden. Dadurch kann insbesondere eine hohe Flexibilität erzielt und/oder auf einen Anschluss der Druckbereitstellungseinheit an zumindest eine externe Fluidquelle verzichtet werden.

Zudem wird vorgeschlagen, dass die Druckbereitstellungseinheit zumindest einen Fluidanschluss aufweist, welcher insbesondere mittelbar und vorteilhaft über zumindest ein Verbindungselement zu einem Anschluss an eine externe Fluidquelle vorgesehen ist. Insbesondere könnte der Fluidanschluss wenigstens teilweise und vorteilhaft vollständig einstückig mit dem Fluideingang und/oder mit der Ventileinheit ausgebildet sein. Der Fluidanschluss und/oder die Ventileinheit könnten insbesondere den Fluideingang ausbilden und insbesondere zu einem Anschluss an eine externe Fluidquelle vorgesehen sein. Insbesondere könnte der Fluidanschluss dazu vorgesehen sein, in wenigstens einem Betriebszustand mittels zumindest eines Verbindungselements mit der externen Fluidquelle verbunden zu sein. Das Verbindungselement könnte insbesondere als ein Schlauch ausgebildet und zu einem Transport von Fluid vorgesehen sein. Die externe Fluidquelle könnte insbesondere zumindest ein Haushaltsfluidanschluss, insbesondere ein Haushaltsgasanschluss, und/oder zumindest ein Kompressionsbehälter, wie beispielsweise eine Gasüberdruckflasche, und/oder zumindest ein Kompressionsgerät, insbesondere zumindest ein Kompressor, sein. Dadurch können insbesondere geringe Produktionskosten ermöglicht werden, da insbesondere auf eine Produktion zumindest eines Fluidbehälters der Druckbereitstellungseinheit verzichtet werden kann.

Die Druckbereitstellungseinheit könnte beispielsweise ausschließlich den Fluidanschluss aufweisen. Alternativ könnte die Druckbereitstellungseinheit ausschließlich den Fluidvorratsbehälter aufweisen. Die Druckbereitstellungseinheit könnte alternativ den Fluidanschluss und den Fluidvorratsbehälter aufweisen.

Beispielsweise könnte ein Kochfeld, auf welchen das Gargeschirr in wenigstens einem Betriebszustand aufgestellt sein könnte, zumindest eine Kochfeld-Steuereinheit aufweisen. Insbesondere könnte die Druckbereitstellungseinheit zu einer Kommunikation mit der Kochfeld-Steuereinheit vorgesehen sein. Die Kochfeld-Steuereinheit könnte insbesondere zu einer Steuerung und/oder Regelung der Druckbereitstellungseinheit, insbesondere der Ventileinheit der Druckbereitstellungseinheit, vorgesehen sein. Vorzugsweise weist die Druckbereitstellungseinheit zumindest eine Steuereinheit auf, welche dazu vorgesehen ist, den Überdruck in dem Aufnahmeraum einzustellen. Insbesondere könnte die Steuereinheit dazu vorgesehen sein, mittels der Ventileinheit, insbesondere mittels des elektrischen Ventils und/oder mittels des magnetischen Ventils der Ventileinheit, den Überdruck in dem Aufnahmeraum einzustellen. Die Steuereinheit könnte insbesondere dazu vorgesehen sein, in wenigstens einem Betriebszustand zu Beginn eines Heizvorgangs eine definierte Menge an Fluid in den Aufnahmeraum einzuleiten. Insbesondere könnte die Steuereinheit dazu vorgesehen sein, in wenigstens einem Betriebszustand zumindest einen in dem Aufnahmeraum herrschenden Druck und/oder den Überdruck wenigstens im Wesentlichen konstant zu halten. Die Steuereinheit könnte insbesondere dazu vorgesehen sein, in wenigstens einem Betriebszustand zumindest einen in dem Aufnahmeraum herrschenden Druck und/oder den Überdruck in regelmäßigen Abständen zu überprüfen. Insbesondere könnte die Steuereinheit dazu vorgesehen sein, in wenigstens einem Betriebszustand und insbesondere während zumindest eines Heizvorgangs, vorteilhaft während genau eines Heizvorgangs, zumindest zwei verschiedene Werte des Überdrucks einzustellen, wodurch insbesondere ein Garen mit unterschiedlichen Temperaturen ermöglicht werden kann. Unter einer "Steuereinheit" soll insbesondere eine Einheit verstanden werden, welche dazu vorgesehen ist, in wenigstens einem Betriebszustand zumindest eine Rechenoperation und/oder Logikoperation auszuführen. Beispielsweise könnte die Steuereinheit eine Recheneinheit und insbesondere zusätzlich zur Recheneinheit eine Speichereinheit mit einem darin gespeicherten Steuer- und/oder Regelprogramm aufweisen, das dazu vorgesehen sein könnte, von der Recheneinheit ausgeführt zu werden. Dadurch kann insbesondere ein hoher Bedienkomfort ermöglicht werden.

Ein besonders hoher Bedienkomfort kann insbesondere erreicht werden durch ein System mit zumindest einem Kochfeld und mit zumindest einem erfindungsgemäßen Gargeschirr, insbesondere mit zumindest einem erfindungsgemäßen Dampfgargeschirr.

Zudem wird vorgeschlagen, dass das System zumindest eine externe Fluidquelle aufweist, welche in wenigstens einem Betriebszustand mit der Druckbereitstellungseinheit insbesondere über zumindest ein Verbindungselement verbunden ist. Insbesondere weist das System zumindest ein Verbindungselement auf, welches in wenigstens einem Betriebszustand die externe Fluidquelle und die Druckbereitstellungseinheit miteinander verbindet und insbesondere Fluid zwischen der externen Fluidquelle und der Druckbereitstellungseinheit transportiert. Dadurch kann insbesondere eine konstante und/oder dauerhafte Versorgung der Druckbereitstellungseinheit mit Fluid erzielt und/oder ein hoher Überdruck in dem Aufnahmeraum bereitgestellt werden.

Der Bedienkomfort kann insbesondere weiter gesteigert werden durch ein Verfahren zum Betrieb eines erfindungsgemäßen Gargeschirrs, insbesondere zumindest eines erfindungsgemäßen Dampfgargeschirrs, mit zumindest einem Erhitzungsbereich, welcher zu einer Aufnahme von von einem Kochfeld bereitbestellter Energie vorgesehen ist, und mit zumindest einem Aufnahmeraum, welcher zu einer Aufnahme von Gargut vorgesehen ist, wobei in wenigstens einem Betriebszustand zu Beginn eines Heizvorgangs eine definierte Menge an Fluid zu einer Bereitstellung eines Überdrucks in den Aufnahmeraum eingeleitet wird.

Das Gargeschirr soll hierbei nicht auf die oben beschriebene Anwendung und Ausführungsform beschränkt sein. Insbesondere kann das Gargeschirr zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit einem Kochfeld und mit einem Gargeschirr in einer schematischen Darstellung,
- Fig. 2: das Gargeschirr in einer schematischen Darstellung,
- Fig. 3: ein alternatives System mit einem Kochfeld, mit einer externen Fluidquelle, mit einem Verbindungselement und mit einem Gargeschirr in einer schematischen Darstellung und
- Fig. 4: das Gargeschirr in einer schematischen Darstellung.

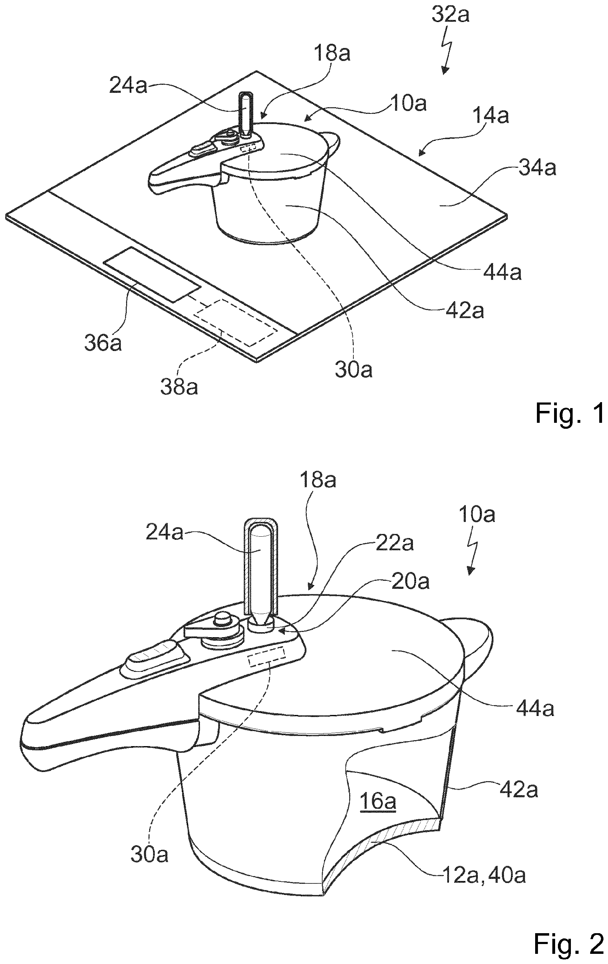

Fig. 1 zeigt ein System 32a mit einem Kochfeld 14a und mit einem Gargeschirr 10a. Das Kochfeld 14a ist als ein Induktionskochfeld ausgebildet. In einem Betriebszustand ist das Gargeschirr 10a auf dem Kochfeld 14a zu einer Beheizung aufgestellt.

Das Kochfeld 14a weist eine Kochfeldplatte 34a auf. Die Kochfeldplatte 34a ist zu einem Aufstellen von Gargeschirr 10a zu einer Beheizung vorgesehen. In einem montierten Zustand bildet die Kochfeldplatte 34a einen Teil eines Kochfeldaußengehäuses aus.

Das Kochfeld 14a weist eine Bedienerschnittstelle 36a zu einer Eingabe und/oder Auswahl von Betriebsparametern auf, beispielsweise einer Heizleistung und/oder einer Heizleistungsdichte und/oder einer Heizzone. Die Bedienerschnittstelle 36a ist zu einer Ausgabe eines Werts eines Betriebsparameters an einen Bediener vorgesehen.

Das Kochfeld 14a weist eine Kochfeld-Steuereinheit 38a auf. Die Kochfeld-Steuereinheit 38a ist dazu vorgesehen, in Abhängigkeit von mittels der Bedienerschnittstelle 36a eingegebener Betriebsparameter Aktionen auszuführen und/oder Einstellungen zu verändern. Die Kochfeld-Steuereinheit 38a regelt in einem Heizbetriebszustand eine Energiezufuhr zu Heizelementen des Kochfelds 14a (nicht dargestellt).

Das Kochfeld 14a weist mehrere Heizelemente auf (nicht dargestellt). Beispielsweise könnten die Heizelemente in Form einer Matrix angeordnet sein. Die Heizelemente könnten insbesondere Teil eines variablen Kochflächenbereichs sein. Alternativ könnten die Heizelemente insbesondere Teil eines klassischen Kochfelds sein, bei welchem insbesondere durch eine Position der Heizelemente definierte, fest vorgegebene Heizzonen existieren könnten, welche insbesondere auf einer Kochfeldplatte markiert sein könnten.

Die Heizelemente sind als Induktionsheizelemente ausgebildet. In einer Einbaulage sind die Heizelemente in einer Vertikalrichtung unterhalb der Kochfeldplatte 34a angeordnet. Die Heizelemente sind dazu vorgesehen, auf der Kochfeldplatte 34a oberhalb der Heizelemente aufgestelltes Gargeschirr 10a zu erhitzen.

Das Gargeschirr 10a weist einen Erhitzungsbereich 12a auf (vgl. Fig. 2). Der Erhitzungsbereich 12a ist zu einer Aufnahme von von dem Kochfeld 14a bereitbestellter Energie vorgesehen. Der Erhitzungsbereich 12a ist zu einer Erhitzung durch zumindest ein Heizelement des Kochfelds 14a vorgesehen. In dem Betriebszustand erhitzt das Heizelement des Kochfelds 14a den Erhitzungsbereich 12a induktiv. Der Erhitzungsbereich 12a ist von einem Gargeschirrboden 40a des Gargeschirrs 10a gebildet.

Das Gargeschirr 10a weist eine Gargeschirrseitenwand 42a auf. Die Gargeschirrseitenwand 42a ist einstückig mit dem Gargeschirrboden 40a verbunden und insbesondere ausgebildet.

Das Gargeschirr 10a weist einen Gargeschirrdeckel 44a auf. In dem Betriebszustand ist der Gargeschirrdeckel 44a mit der Gargeschirrseitenwand 42a verbunden. Der Gargeschirrdeckel 44a, die Gargeschirrseitenwand 42a und der Gargeschirrboden 40a begrenzen in dem Betriebszustand einen Aufnahmeraum 16a des Gargeschirrs 10a.

Das Gargeschirr 10a weist den Aufnahmeraum 16a auf (vgl. Fig. 2). Der Aufnahmeraum 16a ist zu einer Aufnahme von Gargut vorgesehen. In dem Betriebszustand ist der Aufnahmeraum 16a im Wesentlichen luftdicht und druckdicht verschlossen.

Das Gargeschirr 10a weist eine Druckbereitstellungseinheit 18a auf. Die Druckbereitstellungseinheit 18a ist zu einer Bereitstellung eines Überdrucks in dem Aufnahmeraum 16a vorgesehen. In dem Betriebszustand leitet die Druckbereitstellungseinheit 18a zu der Bereitstellung eines Überdrucks in dem Aufnahmeraum 16a Fluid in den Aufnahmeraum 16a ein.

Die Druckbereitstellungseinheit 18a weist einen Fluideingang 20a auf (vgl. Fig. 2). Die Druckbereitstellungseinheit 18a leitet in dem Betriebszustand über den Fluideingang 20a Fluid zu der Bereitstellung des Überdrucks in den Aufnahmeraum 16a ein. In dem Betriebszustand ist eine über den Fluideingang 20a in den Aufnahmeraum 16a eingeleitete Menge an Fluid mittels einer Ventileinheit 22a der Druckbereitstellungseinheit 18a einstellbar.

Die Druckbereitstellungseinheit 18a weist die Ventileinheit 22a auf (vgl. Fig. 2). Die Ventileinheit 22a ist an dem Fluideingang 20a angeordnet. Eine in den Aufnahmeraum 18a eingeleitete Menge an Fluid ist mittels der Ventileinheit 22a einstellbar.

Gemeinsam mit dem Fluid leitet die Druckbereitstellungseinheit 18a in dem Betriebszustand ein Geruchsmittel und ein Geschmacksmittel in den Aufnahmeraum 16a ein. Alternativ könnte die Druckbereitstellungseinheit 18a in dem Betriebszustand ausschließlich ein Geruchsmittel oder ausschließlich ein Geschmacksmittel in den Aufnahmeraum 16a einleiten.

Das Geruchsmittel und das Geschmacksmittel sind jeweils als ein Fluid ausgebildet. Beispielsweise könnten das Geruchsmittel und/oder das Geschmacksmittel in dem in den Aufnahmeraum 16a eingeleiteten Fluid gelöst sein und/oder das in den Aufnahmeraum 16a eingeleitete Fluid ausbilden.

Im vorliegenden Ausführungsbeispiel weist die Druckbereitstellungseinheit 18a einen Fluidvorratsbehälter 24a auf (vgl. Fig. 1 und 2). In dem Fluidvorratsbehälter 24a ist eine in den Aufnahmeraum 16a einzuleitende Menge an Fluid gespeichert. Der Fluidvorratsbehälter 24a ist zu einer Bereitstellung von Fluid vorgesehen.

Die Druckbereitstellungseinheit 18a weist im vorliegenden Ausführungsbeispiel eine Steuereinheit 30a auf. Die Steuereinheit 30a stellt in dem Betriebszustand den Überdruck in dem Aufnahmeraum 16a ein. In dem Betriebszustand steuert die Steuereinheit 30a die Ventileinheit 22a zu der Einstellung des Überdrucks in dem Aufnahmeraum 16a an.

Die Steuereinheit 30a leitet zu Beginn eines Heizvorgangs eine definierte Menge an Fluid in den Aufnahmeraum 16a ein. Im Verlauf des Heizvorgangs könnte die Steuereinheit 30a beispielsweise einen in dem Aufnahmeraum 16a durch Erhitzung eines in dem Aufnahmeraum 16a befindlichen Garguts entstehenden Überdruck durch Ansteuerung der Ventileinheit 22a reduzieren. Alternativ könnte die Druckbereitstellungseinheit 18a beispielsweise zumindest ein Überdruckventil aufweisen, welches insbesondere dazu vorgesehen sein könnte, Fluid aus dem Aufnahmeraum 16a abzuführen im Fall, dass ein Wert des Überdrucks einen Schwellwert erreicht.

In einem Verfahren zum Betrieb des Gargeschirrs 10a wird in dem Betriebszustand zu Beginn des Heizvorgangs eine definierte Menge an Fluid zu der Bereitstellung des Überdrucks in den Aufnahmeraum 16a eingeleitet.

In einer alternativen Ausgestaltung könnte die in den Aufnahmeraum 16a eingeleitete Menge an Fluid durch einen Bediener einstellbar sein. Beispielsweise könnte die Ventileinheit 22a ein manuell betätigbares Ventil aufweisen, mittels welchem der Bediener eine in den Aufnahmeraum 16a eingeleitete Menge an Fluid einstellen könnte. Insbesondere könnte eine von dem Bediener vorgenommene Handlung Priorität über die Steuereinheit 30a haben. Die Steuereinheit 30a könnte insbesondere für den Fall vorgesehen sein, wenn ein Bediener eine Handlung unterlässt.

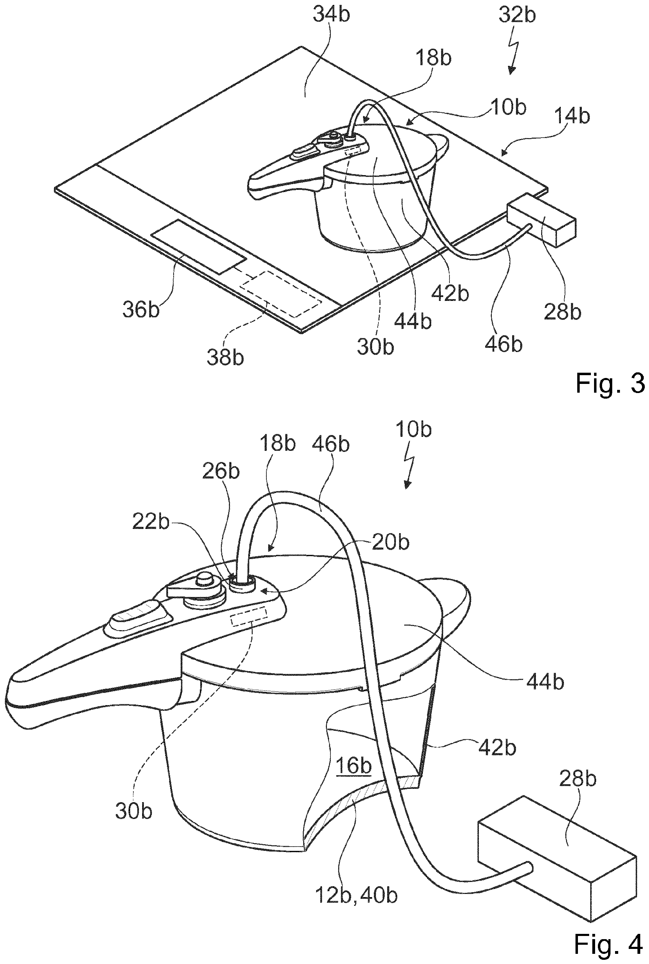

In Fig. 3 und 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 2 verwiesen werden kann. Zur Unterscheidung der Ausführungsbeispiele ist der Buchstabe a in den Bezugszeichen des Ausführungsbeispiels in den Fig. 1 bis 2 durch den Buchstaben b in den Bezugszeichen des Ausführungsbeispiels der Fig. 3 und 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 2 verwiesen werden.

Fig. 3 zeigt ein System 32b mit einem Kochfeld 14b und mit einer externen Fluidquelle 28b und mit einem Gargeschirr 10b. In einem Betriebszustand ist die externe Fluidquelle 28b mit einer Druckbereitstellungseinheit 18b des Gargeschirrs 10b verbunden. Die externe Fluidquelle 28b ist zu einer Verbindung mit der Druckbereitstellungseinheit 18b vorgesehen.

Das System 32b weist ein Verbindungselement 46b auf. Die externe Fluidquelle 28b ist in dem Betriebszustand mit der Druckbereitstellungseinheit 18b über das Verbindungselement 46b verbunden. Das Verbindungselement 46b ist als ein Schlauch, insbesondere als ein Fluidschlauch, ausgebildet.

In dem Betriebszustand verbindet das Verbindungselement 46b die externe Fluidquelle 28b und die Druckbereitstellungseinheit 18b. Die Druckbereitstellungseinheit 18b weist einen Fluidanschluss 26b auf. Der Fluidanschluss 26b ist zu einem Anschluss an die externe Fluidquelle 28b vorgesehen. Der Fluidanschluss 26b ist mittels des Verbindungselements 46b zu einem Anschluss an die externe Fluidquelle 28b vorgesehen.

### Bezugszeichen

- 10: Gargeschirr
- 12: Erhitzungsbereich
- 14: Kochfeld
- 16: Aufnahmeraum
- 18: Druckbereitstellungseinheit
- 20: Fluideingang
- 22: Ventileinheit
- 24: Fluidvorratsbehälter
- 26: Fluidanschluss
- 28: Externe Fluidquelle
- 30: Steuereinheit
- 32: System
- 34: Kochfeldplatte
- 36: Bedienerschnittstelle
- 38: Kochfeld-Steuereinheit
- 40: Gargeschirrboden
- 42: Gargeschirrseitenwand
- 44: Gargeschirrdeckel
- 46: Verbindungselement

## Patentansprüche

1. Gargeschirr mit zumindest einem Erhitzungsbereich (12a-b), welcher zu einer Aufnahme von von einem Kochfeld (14a-b) bereitbestellter Energie vorgesehen ist, und mit zumindest einem Aufnahmeraum (16a-b), welcher zu einer Aufnahme von Gargut vorgesehen ist, **gekennzeichnet durch** zumindest eine Druckbereitstellungseinheit (18a-b), welche zu einer Bereitstellung eines Überdrucks in dem Aufnahmeraum (16a-b) vorgesehen ist.

2. Gargeschirr nach einem der vorhergehenden Ansprüche, **dadurch gekennzeichnet, dass** die Druckbereitstellungseinheit (18a-b) zumindest einen Fluideingang (20a-b) aufweist und dazu vorgesehen ist, über den Fluideingang (20a-b) zumindest ein Fluid zu der Bereitstellung des Überdrucks in den Aufnahmeraum (16ab) einzuleiten.

3. Gargeschirr nach Anspruch 2, **dadurch gekennzeichnet, dass** die Druckbereitstellungseinheit (18a-b) zumindest eine an dem Fluideingang (20a-b) angeordnete Ventileinheit (22a-b) aufweist, mittels welcher eine in den Aufnahmeraum (16a-b) eingeleitete Menge an Fluid einstellbar ist.

4. Gargeschirr nach Anspruch 2 oder 3, **dadurch gekennzeichnet, dass** die Druckbereitstellungseinheit (18a-b) dazu vorgesehen ist, in wenigstens einem Betriebszustand gemeinsam mit dem Fluid zumindest ein Geruchsmittel und/oder Geschmacksmittel in den Aufnahmeraum (16a-b) einzuleiten.

5. Gargeschirr nach einem der Ansprüche 2 bis 4, **dadurch gekennzeichnet, dass** die Druckbereitstellungseinheit (18a) zumindest einen Fluidvorratsbehälter (24a) aufweist, welcher zu einer Bereitstellung von Fluid vorgesehen ist.

6. Gargeschirr nach einem der Ansprüche 2 bis 5, **dadurch gekennzeichnet, dass** die Druckbereitstellungseinheit (18b) zumindest einen Fluidanschluss (26b) aufweist, welcher zu einem Anschluss an eine externe Fluidquelle (28b) vorgesehen ist.

7. Gargeschirr nach einem der vorhergehenden Ansprüche, **dadurch gekennzeichnet, dass** die Druckbereitstellungseinheit (18a-b) zumindest eine Steuereinheit (30a-b) aufweist, welche dazu vorgesehen ist, den Überdruck in dem Aufnahmeraum (16a-b) einzustellen.

8. System mit zumindest einem Kochfeld (14a-b) und mit zumindest einem Gargeschirr (10a-b) nach einem der vorhergehenden Ansprüche.

9. System nach Anspruch 8, **gekennzeichnet durch** zumindest eine externe Fluidquelle (28b), welche in wenigstens einem Betriebszustand mit der Druckbereitstellungseinheit (18b) verbunden ist.

10. Verfahren zum Betrieb eines Gargeschirrs (10a-b), insbesondere nach einem der Ansprüche 1 bis 7, mit zumindest einem Erhitzungsbereich (12a-b), welcher zu einer Aufnahme von von einem Kochfeld (14a-b) bereitbestellter Energie vorgesehen ist, und mit zumindest einem Aufnahmeraum (16a-b), welcher zu einer Aufnahme von Gargut vorgesehen ist, **dadurch gekennzeichnet, dass** in wenigstens einem Betriebszustand zu Beginn eines Heizvorgangs eine definierte Menge an Fluid zu einer Bereitstellung eines Überdrucks in den Aufnahmeraum (16a-b) eingeleitet wird.
